# EUROPÄISCHE PATENTSCHRIFT

(11) **EP 2 704 925 B1**
(45) Veröffentlichungstag und Bekanntmachung des Hinweises auf die Patenterteilung: **14.09.2016**
(21) Anmeldenummer: 12709282.3
(22) Anmeldetag: 24.02.2012
(51) Int. Cl.: B60R 25/20

(54) **VERFAHREN ZUR ANSTEUERUNG EINER VERSCHLUSSELEMENTANORDNUNG EINES KRAFTFAHRZEUGS**
METHOD FOR CONTROLLING A CLOSURE ELEMENT ARRANGEMENT OF A MOTOR VEHICLE
PROCÉDÉ D'ACTIONNEMENT D'UN ENSEMBLE ÉLÉMENT DE FERMETURE D'UN VÉHICULE AUTOMOBILE

(30) Priorität: 27.04.2011 DE 102011018847
(43) Veröffentlichungstag der Anmeldung: 12.03.2014
(73) Patentinhaber: Brose Fahrzeugteile GmbH & Co. Kommanditgesellschaft, Bamberg, 96052 Bamberg (DE)
(72) Erfinder: HERTHAN, Bernd, 96247 Michelau (DE)
(74) Vertreter: Gottschald, Jan
(86) Internationale Anmeldenummer: PCT/EP2012/000811
(87) Internationale Veröffentlichungsnummer: WO 2012/146331

(56) Entgegenhaltungen:
- EP-A2- 1 970 265
- DE-A1- 10 106 400
- DE-A1-102009 019 673
- DE-B3-102005 032 402
- US-A1- 2002 152 010

## Beschreibung

Die Erfindung betrifft ein Verfahren zur Ansteuerung einer Verschlusselementanordnung eines Kraftfahrzeugs gemäß dem Oberbegriff von Anspruch 1 sowie eine Verschlusselementanordnung eines Kraftfahrzeugs gemäß dem Oberbegriff von Anspruch 15.

In der EP 1 970 265 B1 ist ein Sicherheitssystem zum Ver- und Entriegeln eines Kraftfahrzeugschlosses mittels einer Handgestenerkennung beschrieben.

Die heutigen Kraftfahrzeuge sind zunehmend mit motorisch betätigbaren Verschlusselementen ausgestattet. Bei solchen Verschlusselementen kann es sich beispielsweise um Türen, insbesondere Schiebetüren, Klappen, insbesondere Heckklappen, Heckdeckel, Motorhauben, Laderaumböden o. dgl. eines Kraftfahrzeugs handeln. Insoweit ist der Begriff "Verschlusselement" vorliegend weit zu verstehen.

Eine Komfortfunktion, der heute zunehmende Bedeutung zukommt, ist die automatische Betätigung der motorischen Heckklappe eines Kraftfahrzeugs. Bei der bekannten Komfortfunktion (DE 20 2005 020 140 U1), von der die Erfindung ausgeht, ist es vorgesehen, dass ein bedienerseitiges Bedienereignis, hier eine bedienerseitige Fußbewegung, das motorische Öffnen der Heckklappe bewirkt. Hierfür sind eine der Heckklappe zugeordnete Antriebsanordnung, eine Steuerungsanordnung sowie eine Sensoranordnung vorgesehen. Die Steuerungsanordnung überwacht die in den Sensormesswerten auftretenden Sensorereignisse der Sensoranordnung daraufhin, ob das obige Bedienereignis vorliegt. In Abhängigkeit vom Ergebnis dieser Bedienereignisüberwachung wird entsprechend eine Ansteuerung der Antriebsanordnung vorgenommen.

Das obige, bekannte Verfahren zur sensorischen Erfassung eines Bedienereignisses ermöglicht ein besonders komfortables motorisches Betätigen der Heckklappe eines Kraftfahrzeugs. Für die Zuverlässigkeit der Betätigung ist die Auslegung der Steuerungsanordnung und der Sensoranordnung maßgeblich. Schwierigkeiten können sich insbesondere ergeben, wenn unterschiedliche Bediener des Kraftfahrzeugs die in Rede stehende Fußbewegung insbesondere aufgrund unterschiedlicher anatomischer Gegebenheiten auf ganz unterschiedliche Weise umsetzen. Dies kann dazu führen, dass eine Bedienerbewegung nicht als Bedienereignis erkannt wird, obwohl der Bediener diese Bewegung subjektiv korrekt ausgeführt hat.

Der Erfindung liegt das Problem zugrunde, das bekannte Verfahren derart auszugestalten und weiterzubilden, dass eine hohe Zuverlässigkeit bei der Betätigung auch bei mehreren potentiellen Bedienern gewährleistet ist.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, dass ein Teil der Bedienereignisüberwachung im normalbetriebsgemäßen Gebrauch verändert werden kann. Mit "normalbetriebsgemäßer Gebrauch" ist vorliegend der Gebrauchszustand gemeint, in dem das Kraftfahrzeug dem Benutzer für den normalen Betrieb zur Verfügung steht. Herstellerseitige Einricht- oder Installationsarbeiten im Rahmen der Produktion des Kraftfahrzeugs vor dessen Auslieferung sind dem normalbetriebsgemäßen Gebrauch nicht zuzuordnen und dem normalbetriebsgemäßen Gebrauch vorgelagert. Die so gewonnene Flexibilität bei der Bedienereignisüberwachung ermöglicht eine Adaption der Bedienereignisüberwachung auf den jeweils im Hinblick auf den Betrieb des Kraftfahrzeugs aktiven Bediener.

Im Einzelnen wird vorgeschlagen, dass der Bedienereignisüberwachung mindestens ein in der Steuerungsanordnung abgelegtes Bedienereignismodell zugrundeliegt und dass das Bedienereignismodell im normalbetriebsgemäßen Gebrauch erzeugt und/oder parametriert wird.

Damit ist es grundsätzlich möglich, Bedienereignisse ganz neu einzulernen. Andererseits ist es aber auch denkbar, dass vordefinierte Bedienereignisse im normalbetriebsgemäßen Gebrauch auf die Bewegungsabläufe des jeweiligen Bedieners hin parametriert werden.

Bei dem Bedienereignismodell handelt es sich um ein auf die Sensormeßwerte der Sensoranordnung gerichtetes Datenmodell, das einen Satz der für das jeweilige Bedienereignis charakteristischen Variablen enthält. Das Bedienereignismodell kann aber auch ganze Verläufe der Sensormesswerte der Sensoranordnung umfassen. Andere Varianten für die Auslegung des Bedienereignismodells sind denkbar.

Von besonderer Bedeutung für die vorschlagsgemäße Lösung ist die Tatsache, dass das Erzeugen bzw. die Parametrierung des Bedienereignismodells im normalbetriebsgemäßen Gebrauch erfolgen kann. Das macht insbesondere die laufende Anpassung des jeweiligen Bedienereignismodells im laufenden Betrieb möglich.

Die besonders bevorzugten Ausgestaltungen gemäß den Ansprüchen 3 und 4 betreffen die bedarfsweise Benutzung des Kraftfahrzeugs durch mindestens zwei potentielle Bediener.

Eine optimale Bedienerfreundlichkeit ergibt sich wenn jedem potentiellen Bediener ein Bedienereignismodell zugeordnet ist. Damit ist sichergestellt, dass ein Bedienereignis bei mehreren potentiellen Bedienern stets sicher erkannt wird, auch wenn die potentiellen Bediener ganz unterschiedliche Bewegungsverhalten aufweisen.

Bei den weiter bevorzugten Ausgestaltungen gemäß den Ansprüchen 5 und 6 erfolgt die Erzeugung bzw. die Modifikation des Bedienereignismodells dadurch, dass die Steuerungsanordnung in einen Lernmodus gebracht wird. Dies ist eine Variante, bei der der Bediener die volle Kontrolle über eine Änderung des Bedienereignismodells behält, was je nach Bediener als Vorteil gesehen wird.

Anders ist es bei den besonders bevorzugten Ausgestaltungen gemäß den Ansprüchen 7 bis 9. Hier erkennt die Steuerungsanordnung nach unterschiedlichen Strategien selbst, dass eine Erzeugung bzw. Parametrierung des Bedienereignismodells durchzuführen ist. Diese Automatikfunktionen sind für den Bediener nicht merkbar und führen zu einem ganz besonders hohen Bedienkomfort.

Besonders bewährt hat sich die vorschlagsgemäße Lösung, wenn es sich bei dem Bedienereignis um eine Fußbewegung des Bedieners nach den Ansprüchen 10 und 11 handelt. Hier weisen die Bewegungsabläufe unterschiedlicher Bediener erfahrungsgemäß ganz ausgeprägte Unterschiede auf.

Nach einer weiteren Lehre gemäß Anspruch 15, der ebenfalls eigenständige Bedeutung zukommt, wird eine Verschlusselementanordnung beansprucht, die nach dem vorschlagsgemäßen Verfahren arbeitet. Auf alle Ausführungen, die geeignet sind, die Verschlusselementanordnung als solche zu beschreiben, darf verwiesen werden.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einer vorschlagsgemäßen Verschlusselementanordnung zur Durchführung des vorschlagsgemäßen Verfahrens,
- Fig. 2: eine Sequenz eines vorschlagsgemäßen, zu erfassenden Bedienereignisses in den fünf Stufen a) bis e) und
- Fig. 3: zwei beispielhafte Signalverläufe zweier Sensorelemente der Verschlusselementanordnung gemäß Fig. 1 während eines Bedienereignisses gemäß Fig. 2.

Das vorschlagsgemäße Verfahren wird im Folgenden anhand einer Verschlusselementanordnung 1 eines Kraftfahrzeugs erläutert, die ein als Heckklappe ausgestaltetes Verschlusselement 2 aufweist.

Die Ausgestaltung des Verschlusselements 2 als Heckklappe eines Kraftfahrzeugs ist vorliegend bevorzugt. Allerdings darf im Hinblick auf das weite Verständnis des Begriffs "Verschlusselement" auf den einleitenden Teil der Beschreibung verwiesen werden. Insoweit gelten alle Ausführungen zu einer Heckklappe 2 entsprechend für alle anderen Arten von Verschlusselementen.

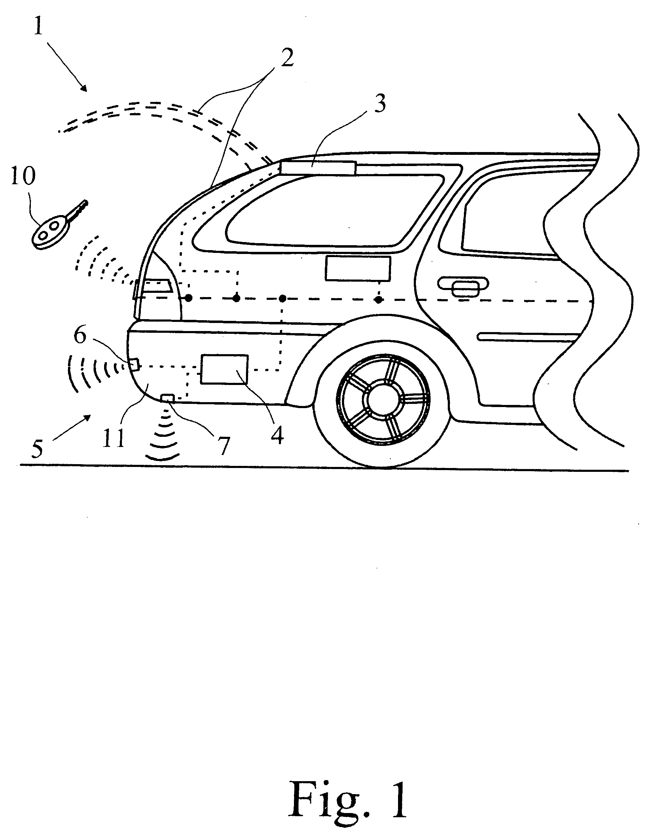

Der Heckklappe 2 ist eine Antriebsanordnung 3 zugeordnet, mittels der eine motorische Verstellung der Heckklappe 2 zwischen der in Fig. 1 in durchgezogener Linie dargestellten Schließstellung und der in Fig. 1 in gestrichelter Linie dargestellten Offenstellung bewirkbar ist.

Es ist ferner eine Steuerungsanordnung 4 vorgesehen, die u.a. der Ansteuerung der Antriebsanordnung 3 dient. Mit der Steuerungsanordnung 4 kommuniziert eine Sensoranordnung 5 mit mindestens einem insbesondere als Näherungssensor ausgestalteten Sensorelement 6, 7. Die noch zu erläuternde Sensoranordnung 5 ist so ausgelegt, dass mit ihr Bedienerbewegungen sensorisch erfassbar sind.

Bei dem dargestellten und insoweit bevorzugten Ausführungsbeispiel weist die Steuerungsanordnung 4 eine zentrale Hardwarestruktur auf. Denkbar ist aber auch, dass die Steuerungsanordnung 4 eine dezentrale Hardwarestruktur aufweist. In diesem Fall ist ein Teil der Steuerungshardware vorzugsweise in der Sensoranordnung 5 untergebracht. Dies bedeutet, dass die Sensoranordnung 5 eine eigene Intelligenz aufweist, die beispielsweise der Signalvorverarbeitung dienen kann.

Bestimmte Bedienerbewegungen sind hier als Bedienereignisse definiert, die jeweils eine bestimmte Reaktion der Steuerungsanordnung 4 auslösen sollen. Vorzugsweise handelt es sich bei dem Bedienereignis um eine Fußbewegung des Bedieners, wie noch erläutert wird.

Um auf das Vorliegen von Bedienereignissen wie oben angesprochen reagieren zu können, ist eine Bedienereignisüberwachung vorgesehen, die von der Steuerungsanordnung 4 durchgeführt wird. Im Rahmen der Bedienereignisüberwachung werden mittels der Steuerungsanordnung 4 die in den Sensormesswerten 8, 9 der Sensoranordnung 5 auftretenden Sensorereignisse daraufhin überwacht, ob ein vorbestimmtes Bedienereignis vorliegt oder nicht. Bei den Sensorereignissen kann es sich um beliebige Abweichungen der Sensormesswerte 8, 9 von den Leerlauf-Sensormeßwerten handeln. Die Leerlauf-Sensormesswerte 8, 9 liegen vor, wenn keine äußere Beeinflussung der Sensoranordnung 5 durch einen Bediener o. dgl. vorliegt.

In Abhängigkeit vom Ergebnis der Bedienereignisüberwachung wird eine entsprechende Ansteuerung der Antriebsanordnung 3, beispielsweise das motorische Öffnen der Heckklappe 2, vorgenommen.

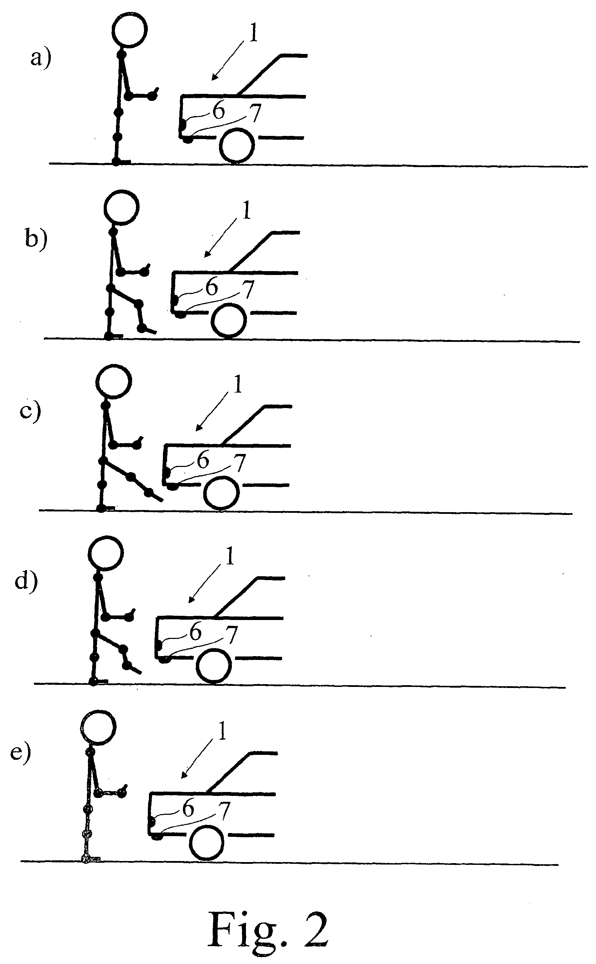

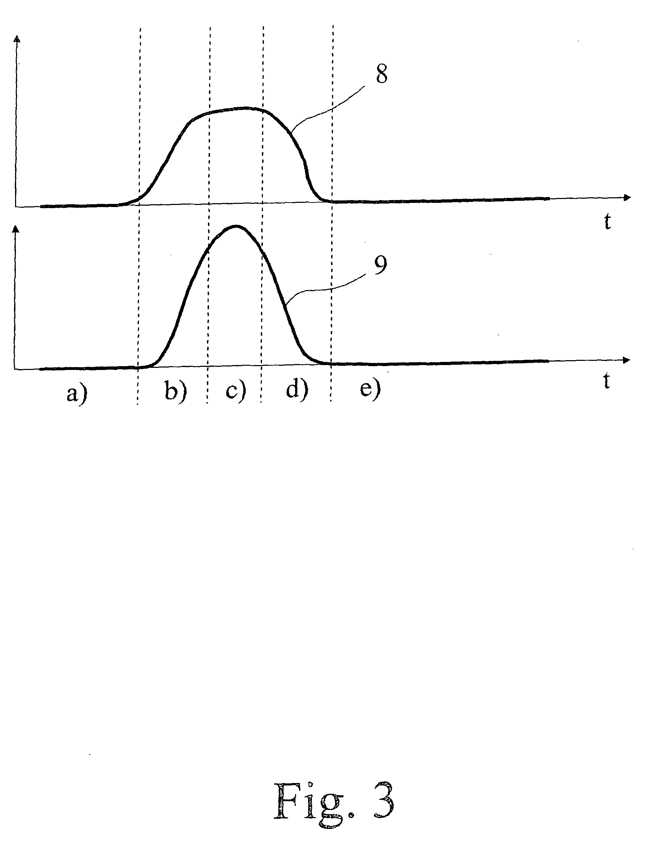

Fig. 2 zeigt in den Abbildungen a) bis e) die Stationen der Sequenz eines Bedienereignisses, das eine Hin- und Rückbewegung des Fußes des Bedieners umfasst. Fig. 3 zeigt die resultierenden Sensorereignisse in den Sensormesswerten 8, 9 der beiden Sensorelemente 6, 7, wobei in der dortigen Darstellung die in Fig. 2 dargestellten Stationen a) bis e) im Zeitbereich entsprechend gekennzeichnet sind. Dies wird weiter unten noch im Detail erläutert.

Wesentlich ist nun, dass der Bedienereignisüberwachung mindestens ein in der Steuerungsanordnung 4 abgelegtes Bedienereignismodell zugrunde liegt. Bei dem Bedienereignismodell kann es sich um einen beliebigen Satz von Variablen handeln, der geeignet ist, den mit einem Bedienereignis einhergehenden Verlauf der Sensormesswerte 8, 9 zu charakterisieren, so dass das Auftreten eines Bedienereignisses in der Steuerungsanordnung 4 mittels eines entsprechenden Algorithmus erkennbar ist.

Das obige Bedienereignismodell lässt sich vorschlagsgemäß im normalbetriebsgemäßen Gebrauch erzeugen und/oder parametrieren. Während bei der Erzeugung des Bedienereignismodells in der Regel die Aufnahme des Verlaufs von Sensormesswerten 8, 9 im Vordergrund steht, geht es bei der Parametrierung eines Bedienereignismodells meist um die Belegung festgelegter Modellvariablen.

Die Erzeugung bzw. die Parametrierung des Bedienereignismodells kann beispielsweise im Wege eines noch zu erläuternden Lernvorgangs vorgenommen werden. Denkbar ist aber auch, dass dies automatisch erfolgt, wie ebenfalls noch erläutert wird.

Vorteilhafterweise sind für den normalbetriebsgemäßen Gebrauch des Kraftfahrzeugs mindestens zwei potentielle Bediener vorgesehen, wobei die Steuerungsanordnung 4 stets ermittelt, welcher der potentiellen Bediener im Hinblick auf den Betriebs des Kraftfahrzeugs aktiv ist. Bei der Ermittlung des aktiven Bedieners können verschiedene Kriterien zur-Anwendung kommen. Beispielsweise kann derjenige Bediener als aktiv gelten, der als letzter Bediener irgendeine Funktion des Kraftfahrzeugs ausgelöst hat, während sich der Funkschlüssel 10 dieses Bedieners in unmittelbarer Nähe des Kraftfahrzeugs befand. Vorzugsweise ist dies der Bediener, der als Letzter das Kraftfahrzeug-Schließsystem o. dgl. verriegelt hat.

Vorzugsweise dient also ein obiger Funkschlüssel 10 der Identifizierung des Bedieners. Hier und vorzugsweise sind daher mindestens zwei potentiellen Bedienern des Kraftfahrzeugs jeweils ein individueller Funkschlüssel 10 zugeordnet, wobei die Steuerungsanordnung 4 aus dem Vorliegen und/oder der Bedienung des Funkschlüssels 10 wie oben erläutert ermittelt, welcher der potentiellen Bediener im Hinblick auf den Betrieb des Kraftfahrzeugs gerade aktiv ist.

Dadurch, dass die Erzeugung und/oder die Parametrierung des mindestens einen Bedienereignismodells im normalbetriebsgemäßen Gebrauch möglich ist, lässt sich leicht realisieren, dass mindestens zwei Bedienereignismodelle in der Steuerungsanordnung 4 abgelegt werden, die unterschiedlichen Bedienern zugeordnet sind. Wesentlich ist dabei die Tatsache, dass der Bedienereignisüberwachung immer gerade das Bedienereignismodell des jeweils aktiven Bedieners zugrundegelegt wird. Damit ist es möglich, bei unterschiedlichen Bedienern entsprechend unterschiedliche Bewegungsabläufe im Rahmen der Bedienereignisüberwachung abzufragen.

In besonders bevorzugter Ausgestaltung lässt sich die Steuerungsanordnung 4 in einen Lernmodus bringen, in dem ein Bedienereignismodell erzeugt oder parametriert wird. Innerhalb des Lernmodus nimmt der Bediener vorzugsweise ein Bedienereignis vor, wobei aus den resultierenden Sensormesswerten 8, 9, mittels der Steuerungsanordnung 4 die Erzeugung bzw. Parametrierung des Bedienereignismodells vorgenommen und anschließend abgelegt, also gespeichert wird.

Im Falle der Erzeugung des Bedienereignismodells ist es möglich, beliebige Bedienerdefinierte Bedienereignisse festzulegen, soweit die dazugehörigen Bedienerbewegungen mittels der Sensoranordnung 5 erfassbar sind. Beispielsweise können neben Fußbewegungen auch andere Gesten, wie "Wisch-" oder "Streichbewegungen" o. dgl. als Bedienereignisse eingelernt werden.

In besonders bevorzugter Ausgestaltung wird der Lernmodus bedienerspezifisch durchgeführt, und zwar derart, dass das Bedienereignismodell für einen bestimmten Bediener, insbesondere für den während des Lernens aktiven Bediener, abgelegt wird.

Das Einstellen des Lernmodus kann auf vielfältige Arten erfolgen. Beispielsweise kann der Lernmodus eingestellt werden, wenn eine Verriegelungstaste am Funkschlüssel mehrmalig oder länger betätigt wird, nachdem eine vorbestimmte Bedieneraktion, beispielsweise das Einschalten der Zündung oder das Entriegeln, ausgelöst wurde.

Eine weitere bevorzugte Ausgestaltung betrifft den Fall, dass ein Sensorereignis im Rahmen der Bedienereignisüberwachung als Bedienereignis erkannt wurde. Bei dieser bevorzugten Ausgestaltung wird dann mittels der Steuerungsanordnung 4 der aktive Bediener ermittelt, wobei schließlich das dem Bedienereignis zugrunde liegende Bedienereignismodell dem jeweils aktiven Bediener zugeordnet wird.

In weiter bevorzugter Ausgestaltung kann es hier vorgesehen sein, dass bei der Bedienereignisüberwachung stets alle in der Steuerungsanordnung 4 abgelegten Bedienereignismodelle herangezogen werden. Sofern dann eines der Bedienereignismodelle zu einer Erkennung eines Bedienereignisses führt, wird dieses Bedienereignismodell vorzugsweise dem jeweils aktiven Bediener zugeordnet.

Interessant bei der letztgenannten Variante ist die Tatsache, dass die Zuordnung des Bedienereignismodells zu dem jeweils aktiven Bediener automatisch erfolgt, ohne dass dies der Bediener bemerken muss. Eine solche Selbstoptimierung der Steuerungsanordnung 4 führt zu einem ganz besonders hohen Bedienkomfort.

Eine andere bevorzugte Selbstoptimierung wird für den Fall vorgeschlagen, dass ein Sensorereignis im Rahmen der Bedienereignisüberwachung nicht als Bedienereignis erkannt wurde, wobei anschließend, insbesondere innerhalb eines vorbestimmten Zeitraums, eine Ansteuerung der Antriebsanordnung 3 manuell, hier und vorzugsweise über den Funkschlüssel 10, ausgelöst wurde.

Der obige Sachverhalt lässt in der Regel den Schluß zu, dass ein Bediener erfolglos versucht hat, durch ein Bedienereignis, hier durch eine Fußbewegung, eine Funktion der Verschlusselementanordnung 1, insbesondere das Öffnen der Heckklappe 2, auszulösen und dass der Bediener nach diesem erfolglosen Versuch dazu übergegangen ist, die Funktion der Verschlusselementanordnung 1, hier die Ansteuerung der Antriebsanordnung 3, manuell, insbesondere über den Funkschlüssel 10 auszulösen. In einem solchen Fall ist es vorzugsweise vorgesehen, dass die Steuerungsanordnung 4 aus dem jeweiligen Sensorereignis (das ja zunächst nicht als Bedienereignis erkannt wurde) ein Bedienereignismodell erzeugt oder parametriert, und zwar derart, dass dieses Sensorereignis im weiteren Betrieb doch als Bedienereignis erkannt wird. Dabei ist es hier und vorzugsweise vorgesehen, dass das so erzeugte bzw. parametrierte Bedienereignismodell einem Bediener, hier und vorzugsweise dem aktiven Bediener, zugeordnet wird. Damit wird sichergestellt, dass das vom Bediener zuletzt durchgeführte Bedienereignis zukünftig zu einem Auslösen der gewünschten Funktion führt, selbst wenn dies beim letzten Anlauf gescheitert war.

Eine weitere bevorzugte Variante einer Selbstoptimierung besteht darin, dass die Steuerungsanordnung 4 das jeweilige Bedienereignismodell bei praktisch jeder Erkennung eines Bedienereignisses optimiert. Hierfür ist es vorgesehen, dass mittels der Steuerungsanordnung 4 bei jeder erfolgten Erkennung eines Bedienereignisses ein Abstandswert für den Abstand des der Erkennung zugrundeliegenden Sensorereignisses zu dem jeweiligen Bedienereignismodell ermittelt und ggf. gespeichert wird. Der Abstandswert gibt an, in welchem Maße das der Erkennung zugrundeliegende Sensorereignis den in dem Bedienereignismodell festgelegten Kriterien zur Erkennung eines Bedienereignisses entspricht.

Basierend auf dem Abstandswert wird eine Modifikation des Bedienereignismodells derart durchgeführt, dass ein statistischer Abstandswert, hier und vorzugsweise der mittlere Abstandswert, über eine Anzahl der letzten Bedienereigniserkennungen reduziert wird. Dies bedeutet, dass ein Bedienereignis, das von einem bestimmten Bediener unter Zugrundelegung des entsprechenden Bedienereignismodells stets nur knapp als Bedienereignis erkannt wird, zu einer Modifikation des Bedienereignismodells führt. Die Modifikation ist dabei so getroffen, dass sich der Abstandswert auf einen reduzierten, insbesondere minimalen Wert einstellt, so dass die Sicherheit bei der Betätigung insgesamt erhöht ist.

Bei dem zu erkennenden Bedienereignis handelt es sich, wie oben schon angesprochen, um eine vorbestimmte Bedienerbewegung, die über den zeitlichen Verlauf der Sensormesswerte 8, 9 erfasst wird.

Das zu erfassende Bedienereignis ist wie oben angesprochen vorzugsweise eine Fußbewegung des Bedieners, wobei die Sensoranordnung 5 mindestens zwei, hier genau zwei, als Näherungssensoren ausgestaltete Sensorelemente 6, 7 aufweist, die, wie in Fig. 1 dargestellt, in oder an einem hinteren Verkleidungsteil 11, hier und vorzugsweise dem hinteren Stoßfänger 11, des Kraftfahrzeugs angeordnet sind. Dabei handelt es sich bei den beiden Sensorelementen 6, 7 vorzugsweise um kapazitive Näherungssensoren mit Elektroden, die sich jeweils über einen wesentlichen Teil der Breite des Kraftfahrzeugs erstrecken. Damit ist gewährleistet, dass die Erfassung des Bedienereignisses entsprechend über den wesentlichen Teil der Breite des Kraftfahrzeugs möglich ist.

Die Sensoranordnung 5 kann an beliebigen Stellen des Kraftfahrzeugs angeordnet sein. Denkbar ist beispielsweise, dass die Sensoranordnung 5 im Seitenbereich des Kraftfahrzeugs, insbesondere an einem Kotflügel, einer Seitentür o. dgl. angeordnet ist.

Es lässt sich der Darstellung gemäß Fig. 1 entnehmen, dass der schematisch dargestellte Erfassungsbereich des oberen Sensorelements 6 jedenfalls auch nach hinten weist und der Erfassungsbereich des unteren Sensorelements 7 jedenfalls auch nach unten weist. Diese Sensoranordnung 5 führt entsprechend zu den in Fig. 3 dargestellten Sensormesswerten 8, 9.

Wie oben erläutert, kann das vorbestimmte Bedienereignis je nach Bediener durchaus unterschiedlich ausfallen, so dass vorschlagsgemäß bedienerspezifische Bedienereignismodelle bei der Bedienereignisüberwachung Anwendung finden. Dabei kommen hier und vorzugsweise im Rahmen der Bedienereignisüberwachung grundsätzlich bekannte Verfahren der Mustererkennung zur Anwendung.

Als Grundlage für die Mustererkennung werden dem für das zu erfassende Bedienereignis charakteristischen Verhalten der Sensormesswerte 8, 9 zumindest eines Sensorelements 6, 7 eine Reihe von charakteristischen Merkmalen zugeordnet, die Bestandteil des Bedienereignismodells sind und deren Auftreten im Rahmen der Bedienereignisüberwachung überwacht werden. Im Rahmen der Mustererkennung werden diese Merkmale zunächst aus den Sensormesswerten 8, 9 extrahiert und anschließend klassifiziert.

Dies entspricht der grundlegenden Konzeption bei der Mustererkennung. Dabei werden ggf. vorgefilterte Messwerte zunächst einer Merkmalsextraktion unterzogen. Die zu extrahierenden Merkmale sind so auszuwählen, dass sie "trennungswirksam" sind. Dies bedeutet, dass die Merkmale geeignet sein müssen, den Zustand "mit Bedienereignis" von dem Zustand "ohne Bedienereignis" zu unterscheiden (Christopher M. Bishop, "Patern Recognisson and Mashine Learning", Springer, Berlin, 2006, ISBN 0-387-31073-8).

Nach der Merkmalsreduktion wird eine Klassifikation vorgenommen, in der die Ausbildung der extrahierten Merkmale bestimmten Klassen von zu erfassenden Mustern zugeordnet werden.

Bei der in Fig. 3 dargestellten Hin- und Rückbewegung des Fußes des Bedieners werden impulsartige Sensorereignisse in den Sensormesswerten 8, 9 erzeugt, die im Folgenden als "Sensorimpulse" bezeichnet werden. Als zu extrahierende Merkmale lassen sich die Breite, die Höhe, die Flankensteilheit, die Krümmung von Teilen der Sensorimpulse, der zeitliche Versatz zweier Sensorimpulse eines Sensorelements 6, 7 o. dgl. definieren. Im Rahmen der Klassifikation werden diese Merkmale dann auf Grenzwerte oder Grenzbereiche hin überprüft.

Weitere denkbare Merkmale sind hier der zeitliche Versatz der Sensorimpulse zweier Sensorelemente 6, 7 oder eine vorbestimmte Korrelation, insbesondere die Kreuzkorrelation der Sensormesswerte 8, 9 zweier Sensorelemente 6, 7 zueinander. Auch diese Merkmale lassen sich mit Hilfe von Grenzwerten und Grenzbereichen derart klassifizieren, dass ggf. zusammen mit den zuvor genannten Merkmalen ein Rückschluss auf das Auftreten oder Nichtauftreten eines Bedienereignisses möglich ist.

Wesentlich bei der obigen Mustererkennung ist die Tatsache, dass die der Mustererkennung zugrundeliegenden Reihe von Merkmalen dem Bedienereignismodell zugeordnet sind. Bei der Erzeugung bzw. Parametrierung des Bedienereignismodells geht es um die Festsetzung eben dieser Merkmale. Die Mustererkennung läuft dann in an sich bekannter Weise ab.

Für alle oben erläuterten Ausführungsbeispiele darf nochmals darauf hingewiesen werden, dass die Steuerungsanordnung 4 hardwaretechnisch dezentral angeordnet sein kann. Das kann beispielsweise dazu führen, dass zumindest ein Teil des Bedienereignismodells in der Sensoranordnung 5 abgelegt wird und/oder dass ein Teil der Bedienereignisüberwachung in der Sensoranordnung 5 durchgeführt wird.

Nach einer weiteren Lehre, der ebenfalls eigenständige Bedeutung zukommt, wird die Verschlusselementanordnung 1 mit Verschlusselement 2, Antriebsanordnung 3, Steuerungsanordnung 4 und Sensoranordnung 5 als solche beansprucht. Auf alle Ausführungen, die geeignet sind, die Verschlusselementanordnung 1 zu beschreiben, darf verwiesen werden.

Es wurde schon darauf hingewiesen, dass beide vorschlagsgemäßen Lehren auf alle Arten von Verschlusselementen 2 anwendbar sind. Neben der erläuterten Anwendung auf eine Heckklappe 2 darf die Verwendung auf eine Schiebetür als ganz besonders vorteilhaft herausgestellt werden. Dadurch, dass Schiebetüren regelmäßig einen nur geringen Bewegungsbereich überstreichen, können die oben beschriebenen, vorschlagsgemäßen Automatikfunktionen ohne ein nennenswertes Kollisionsrisiko umgesetzt werden. Vor diesem Hintergrund ist die Anwendung der vorschlagsgemäßen Lehren auf Schiebetüren bevorzugt.

## Patentansprüche

1. Verfahren zur Ansteuerung einer Verschlusselementanordnung (1) eines Kraftfahrzeugs, wobei die Verschlusselementanordnung (1) ein Verschlusselement (2), eine dem Verschlusselement (2) zugeordnete Antriebsanordnung (3), eine Steuerungsanordnung (4) sowie eine Sensoranordnung (5) mit mindestens einem ausgestalteten Sensorelement (6, 7) aufweist, wobei im Rahmen einer Bedienereignisüberwachung mittels der Steuerungsanordnung (4) Sensorereignisse in den Sensormesswerten (8, 9) der Sensoranordnung (5) daraufhin überwacht werden, ob ein vorbestimmtes Bedienereignis vorliegt, wobei in Abhängigkeit vom Ergebnis der Bedienereignisüberwachung eine Ansteuerung der Antriebsanordnung (3) vorgenommen wird, wobei der Bedienereignisüberwachung mindestens ein in der Steuerungsanordnung (4) abgelegtes Bedienereignismodell zugrundeliegt, wobei das Bedienereignismodell im normalbetriebsgemäßen Gebrauch erzeugt und/oder parametriert wird, wobei mindestens zwei Bedienereignismodelle in der Steuerungsanordnung (4) abgelegt werden, die unterschiedlichen Bedienern zugeordnet sind und wobei der Bedienereignisüberwachung das Bedienereignismodell des jeweils im Hinblick auf den Betrieb des Kraftfahrzeugs aktiven Bedieners zugrundegelegt wird,
**dadurch gekennzeichnet,**
**dass** das Bedienereignis als vorbestimmte Bedienerbewegung definiert ist, die über den zeitlichen Verlauf der Sensormesswerte (8, 9) erfasst wird und dass die Bedienereignismodelle jeweils auf die Sensormesswerte der Sensoranordnung gerichtete Datenmodelle sind, die einen Satz der für das Bedienereignis charakteristischen Variablen enthalten.

2. Verfahren nach Anspruch 1, **dadurch gekennzeichnet, dass** das mindestens eine Sensorelement als Näherungssensor ausgestaltet ist und im Rahmen einer Bedienereignisüberwachung mittels der Steuerungsanordnung (4) Sensorereignisse in den Sensormesswerten (8, 9) der Sensoranordnung (5) daraufhin überwacht werden, ob ein vorbestimmtes Bedienereignis vorliegt.

3. Verfahren nach Anspruch 1 oder 2, **dadurch gekennzeichnet, dass** mindestens zwei potentielle Bediener des Kraftfahrzeugs vorgesehen sind und dass die Steuerungsanordnung (4) ermittelt, welcher der potentiellen Bediener im Hinblick auf den Betrieb des Kraftfahrzeugs aktiv ist.

4. Verfahren nach einem der vorhergehenden Ansprüche, **dadurch gekennzeichnet, dass** mindestens zwei potentiellen Bedienern des Kraftfahrzeugs jeweils ein individueller Funkschlüssel (10) zugeordnet sind und dass die Steuerungsanordnung (4) aus dem Vorliegen und/oder der Bedienung des Funkschlüssels (10) ermittelt, welcher der potentiellen Bediener im Hinblick auf den Betrieb des Kraftfahrzeugs aktiv ist.

5. Verfahren nach einem der vorhergehenden Ansprüche, **dadurch gekennzeichnet, dass** die Steuerungsanordnung (4) in einen Lernmodus bringbar ist, in dem der Bediener ein Bedienereignis vornimmt, und dass aus den resultierenden Sensormesswerten (8, 9) mittels der Steuerungsanordnung (4) ein Bedienereignismodell erzeugt oder parametriert und anschließend abgelegt wird.

6. Verfahren nach Anspruch 5, **dadurch gekennzeichnet, dass** der Lernmodus
bedienerspezifisch durchgeführt wird derart, dass das Bedienereignismodell für einen bestimmten Bediener, insbesondere für den im Hinblick auf den Betrieb des Kraftfahrzeugs aktiven Bediener, abgelegt wird.

7. Verfahren nach einem der vorhergehenden Ansprüche, **dadurch gekennzeichnet, dass** für den Fall, dass ein Sensorereignis im Rahmen der Bedienereignisüberwachung als Bedienereignis erkannt wurde, mittels der Steuerungsanordnung (4) der im Hinblick auf den Betrieb des Kraftfahrzeugs aktive Bediener ermittelt und das dem Bedienereignis zugrundeliegende Bedienereignismodell dem im Hinblick auf den Betrieb des Kraftfahrzeugs aktiven Bediener zugeordnet wird.

8. Verfahren nach einem der vorhergehenden Ansprüche, **dadurch gekennzeichnet, dass** für den Fall, dass ein Sensorereignis im Rahmen der Bedienereignisüberwachung nicht als Bedienereignis erkannt wurde und dass anschließend, eine Ansteuerung der Antriebsanordnung (3) manuell, ausgelöst wurde, mittels der Steuerungsanordnung (4) aus dem Sensorereignis ein Bedienereignismodell erzeugt oder parametriert wird derart, dass das Sensorereignis im weiteren Betrieb als Bedienereignis erkannt wird.

9. Verfahren nach einem der vorhergehenden Ansprüche, **dadurch gekennzeichnet, dass** für den Fall, dass ein Sensorereignis im Rahmen der Bedienereignisüberwachung nicht als Bedienereignis erkannt wurde und dass anschließend innerhalb eines vorbestimmten Zeitraums eine Ansteuerung der Antriebsanordnung (3) manuell ausgelöst wurde, mittels der Steuerungs anordnung (4) aus dem Sensorereignis ein Bedienereignismodell erzeugt oder parametriert wird derart, dass das Sensorereignis im weiteren Betrieb als Bedienereignis erkannt wird.

10. Verfahren nach einem der vorhergehenden Ansprüche, **dadurch gekennzeichnet, dass** mindestens ein Bedienereignis als Fußbewegung des Bedieners definiert ist,

11. Verfahren nach Anspruch 8, **dadurch gekennzeichnet, dass** mindestens ein Bedienereignis als eine Hin- und Rückbewegung des Fußes des Bedieners definiert ist,

12. Verfahren nach Anspruch 11, **dadurch gekennzeichnet, dass** während des Bedienereignisses beide Sensorelemente (6, 7) einen impulsartigen zeitlichen Verlauf der Sensormesswerte (8, 9) - Sensorimpuls - erzeugen.

13. Verfahren nach einem der vorhergehenden Ansprüche, **dadurch gekennzeichnet, dass** das Bedienereignismodel1 eine Reihe von Merkmalen enthält, die dem für das Bedienereignis typischen Verlauf der Sensormesswerte (8, 9) zumindest eines Sensorelements (6, 7) zugeordnet sind, und die im Rahmen der Bedienereignisüberwachung nach Art einer Mustererkennung zunächst aus den Sensormesswerten (8, 9) extrahiert und anschließend klassifiziert werden.

14. Verfahren nach Anspruch 13, **dadurch gekennzeichnet, dass** die Merkmale als Breite und/oder als Höhe und/oder als Flankensteilheit und/oder als Krümmung von Teilen der Sensorimpulse und/oder als zeitlicher Versatz zweier Sensorimpulse eines Sensorelements (6, 7) definiert sind.

15. Verschlusselementanordnung eines Kraftfahrzeugs zur Durchführung des Verfahrens nach einem der vorhergehenden Ansprüche, wobei die Verschlusselementanordnung ein Verschlusselement (2), eine dem Verschlusselement (2) zugeordnete Antriebsanordnung (3), eine Steuerungsanordnung (4) sowie eine Sensoranordnung (5) mit mindestens einem Sensorelement (6, 7) aufweist, wobei im Rahmen einer Bedienereignisüberwachung die Steuerungsanordnung (4) Sensorereignisse in den Sensormesswerten (8, 9) der Sensoranordnung (5) daraufhin überwacht, ob ein vorbestimmtes Bedienereignis vorliegt, und in Abhängigkeit vom Ergebnis der Bedienereignisüberwachung eine Ansteuerung der Antriebsanordnung (3) vornimmt, wobei der Bedienereignisüberwachung mindestens ein in der Steuerungsanordnung (4) abgelegtes Bedienereignismodell zugrundeliegt und wobei das Bedienereignismodell im normalbetriebsgemäßen Gebrauch erzeugbar und/oder parametrierbar ist.

## Claims

1. Method for actuating a closure element arrangement (1) in a motor vehicle, wherein the closure element arrangement (1) has a closure element (2), a drive arrangement (3) associated with the closure element (2), a control arrangement (4) and a sensor arrangement (5) having at least one configured sensor element (6, 7), wherein operator control event monitoring involves the control arrangement (4) being used to monitor sensor events in the sensor measured values (8, 9) from the sensor arrangement (5) for whether a predetermined operator control event is occurring, and the result of the operator control event monitoring is taken as a basis for actuating the drive arrangement (3), wherein the operator control event monitoring is based on at least one operator control event model stored in the control arrangement (4), wherein the operator control event model is produced and/or parameterized during use compliant with normal operation, wherein at least two operator control event models that are associated with different operators are stored in the control arrangement (4) and wherein the operator control event monitoring is based on the operator control event model of the respective operator who is active for the operation of the motor vehicle,
**characterized**
**in that** the operator control event is defined as a predetermined operator movement that is sensed over the time profile of the sensor measured values (8, 9) and in that the operator control event models are in each case data models that are directed to the sensor measured values from the sensor arrangement and that contain a set of variables that are characteristic of the operator control event.

2. Method according to Claim 1, **characterized in that** the at least one sensor element is in the form of a proximity sensor and operator control event monitoring involves the control arrangement (4) being used to monitor sensor events in the sensor measured values (8, 9) from the sensor arrangement (5) for whether a predetermined operator control event is occurring.

3. Method according to Claim 1 or 2, **characterized in that** at least two potential operators of the motor vehicle are envisaged and **in that** the control arrangement (4) ascertains which of the potential operators is active for the operation of the motor vehicle.

4. Method according to one of the preceding claims, **characterized in that** at least two potential operators of the motor vehicle each have an individual associated radio key (10) and **in that** the control arrangement (4) ascertains from the presence and/or the operation of the radio key (10) which of the potential operators is active for the operation of the motor vehicle.

5. Method according to one of the preceding claims, **characterized in that** the control arrangement (4) can be put into a learning mode in which the operator performs an operator control event, and **in that** the control arrangement (4) is used to produce or parameterize and subsequently store an operator control event model from the resulting sensor measured values (8, 9) .

6. Method according to Claim 5, **characterized in that** the learning mode is performed on an operator-specific basis such that the operator control event model is stored for a particular operator, particularly for the operator who is active for the operation of the motor vehicle.

7. Method according to one of the preceding clams **characterized in that** if a sensor event has been recognized as an operator control event in the course of the operator control event monitoring, the control arrangement (4) is used to ascertain the operator who is active for the operation of the motor vehicle and the operator control event model on which the operator control event is based is associated with the operator who is active for the operation of the motor vehicle.

8. Method according to one of the preceding claims, **characterized in that** if a sensor event has not been recognized as an operator control event in the course of the operator control event monitoring and subsequently actuation of the drive arrangement (3) has been initiated manually, the control arrangement (4) is used to produce or parameterize an operator control event model from the sensor event such that the sensor event is recognized as an operator control event during further operation.

9. Method according to one of the preceding claims, **characterized in that** if a sensor event has not been recognized as an operator control event in the course of the operator control event monitoring and subsequently, within a predetermined period, actuation of the drive arrangement (3) has been initiated manually, the control arrangement (4) is used to produce or parameterize an operator control event model from the sensor event such that the sensor event is recognized as an operator control event during further operation.

10. Method according to one of the preceding clams, **characterized in that** at least one operator control event is defined as a foot movement by the operator.

11. Method according to Claim 8, **characterized in that** at least one operator control event is defined as a back and forth movement of the foot of the operator.

12. Method according to Claim 11, **characterized in that** during the operator control event both sensor elements (6, 7) produce a pulse-like time profile for the sensor measured values (8, 9) - sensor pulses.

13. Method according to one of the preceding claims, **characterized in that** the operator control event model contains a series of features that are associated with the profile of the sensor measured values (8, 9) from at least one sensor element (6, 7) that is typical of the operator control event and that, in the course of the operator control event monitoring, are first of all extracted from the sensor measured values (8, 9) and then classified in the manner of pattern recognition.

14. Method according to Claim 13, **characterized in that** the features are defined as a width and/or as a height and/or as an edge gradient and/or as a curvature of portions of the sensor pulses and/or as a time offset between two sensor pulses from a sensor element (6, 7).

15. Closure element arrangement in a motor vehicle for the purpose of carrying out the method according to one of the preceding claims, wherein the closure clement arrangement has a closure element (2), a drive arrangement (3) associated with the closure element (2), a control arrangement (4) and a sensor arrangement (5) having at least one sensor element (6, 7), wherein operator control event monitoring involves the control arrangement (4) monitoring sensor events in the sensor measured values (8, 9) from the sensor arrangement (5) for whether a predetermined operator control event is occurring, and the result of the operator control event monitoring is taken as a basis for actuating the drive arrangement (3), wherein the operator control event monitoring is based on at least one operator control event model stored in the control arrangement (4) and wherein the operator control event model can he produced and/or parameterized during use compliant with normal operation.

## Revendications

1. Procédé destiné à activer un dispositif d'élément de fermeture (1) d'un véhicule automobile, le dispositif d'élément de fermeture (1) comportant un élément de fermeture (2), un dispositif d'entraînement (3) associé à l'élément de fermeture (2), un dispositif de commande (4), ainsi qu'un dispositif de capteurs (5) avec au moins un élément capteur (6, 7) aménagé, dans le cadre d'une supervision des événements de manipulation au moyen du dispositif de commande (4), des événements de capteurs dans les valeurs de mesure (8, 9) des capteurs du dispositif de capteurs (5) étant supervisés au niveau de la présence d'un événement de manipulation prédéfini en fonction du résultat de la supervision des événements de manipulation, une activation du dispositif d'entraînement (3) étant réalisée, la supervision des événements de manipulation étant basée sur au moins un modèle d'événement de manipulation sauvegardé dans le dispositif de commande (4), le modèle d'événement de manipulation étant généré et/ou paramétré lors d'une utilisation en service normal, au moins deux modèles d'événements de manipulation associés à différents utilisateurs étant sauvegardés dans le dispositif de commande (4) et la supervision de l'événement de manipulation étant basée sur le modèle d'événement de manipulation de l'utilisateur respectivement actif au regard du service du véhicule automobile,
**caractérisé en ce que**
l'événement de manipulation est défini en tant que mouvement prédéfini de l'utilisateur, qui est détecté par l'intermédiaire de la courbe temporelle des valeurs de mesure des capteurs (8, 9) et **en ce que** les modèles d'événements de manipulation sont des modèles de données respectivement orientés sur les valeurs de mesure de capteurs du dispositif de capteurs, qui contiennent un jeu de variables caractéristiques pour l'événement de manipulation.

2. Procédé selon la revendication 1, **caractérisé en ce que** l'au moins un élément capteur est conçu en tant que détecteur de présence et dans le cadre d'une supervision de l'événement de manipulation au moyen du dispositif de commande (4), des événements de capteurs dans les valeurs de mesure des capteurs (8, 9) du dispositif de capteurs (5) sont supervisés au niveau de la présence d'un événement de manipulation prédéfini.

3. Procédé selon la revendication 1 ou la revendication 2, **caractérisé en ce qu'**au moins deux utilisateurs potentiels du véhicule automobile sont prévus et **en ce que** le dispositif de commande (4) détermine lequel des utilisateurs potentiels est actif au regard du service du véhicule automobile.

4. Procédé selon l'une quelconque des revendications précédentes, **caractérisé en ce qu'**à au moins deux utilisateurs potentiels du véhicule automobile est associée respectivement une radiocommande (10) individuelle et **en ce qu'**à partir de la présence et/ou du service de la radiocommande, (10), le dispositif de commande (4) détermine lequel des utilisateurs potentiels est actif, au regard du service du véhicule automobile.

5. Procédé selon l'une quelconque des revendications précédentes, **caractérisé en ce que** le dispositif de commande (4) peut être passé dans un mode d'apprentissage dans lequel l'utilisateur procède à un événement de manipulation et **en ce que** qu'à partir des valeurs de mesure des capteurs (8, 9) résultantes, au moyen du dispositif de commande (4), un modèle d'événement de manipulation est généré ou paramétré et ensuite sauvegardé.

6. Procédé selon la revendication 5, **caractérisé en ce que** le mode d'apprentissage est réalisé de manière spécifique à l'utilisateur, de telle sorte que le modèle d'événement de manipulation soit sauvegardé pour un utilisateur précis, notamment pour l'utilisateur actif au regard du service du véhicule automobile.

7. Procédé selon l'une quelconque des revendications précédentes, **caractérisé en ce que** pour le cas où un événement de capteur a été identifié en tant qu'événement de manipulation dans le cadre de la supervision des événements de manipulation, au moyen du dispositif de commande (4), l'utilisateur actif au regard du service du véhicule automobile est déterminé et **en ce qu'**au modèle d'événement de manipulation sur lequel est basé l'événement de manipulation est associé l'utilisateur actif au regard du service du véhicule automobile.

8. Procédé selon l'une quelconque des revendications précédentes, **caractérisé en ce que** pour le cas où un événement de capteur n'a pas été identifié en tant qu'événement de manipulation dans le cadre de la supervision des événements de manipulation et où par la suite, une activation du dispositif d'entraînement (3) a été déclenchée manuellement, au moyen du dispositif de commande (4), il est généré ou paramétré à partir de l'événement de capteur un modèle d'événement de manipulation, de telle sorte que dans la suite du service, l'événement de capteur soit identifié en tant qu'événement de manipulation..

9. Procédé selon l'une quelconque des revendications précédentes, **caractérisé en ce que** pour le cas où un événement de capteur n'a pas été reconnu en tant qu'événement de manipulation, dans le cadre de la supervision des événements de manipulation et où par la suite, dans une période prédéfinie, une activation du dispositif d'entraînement (3) a été déclenchée manuellement, au moyen du dispositif de commande (4), un modèle d'événement de manipulation est généré ou paramétré à partir de l'événement de capteur, de telle sorte que dans la suite du service, l'événement de capteur soit identifié en tant qu'événement de manipulation.

10. Procédé selon l'une quelconque des revendications précédentes, **caractérisé en ce qu'**au moins un événement de manipulation est défini en tant que mouvement du pied de l'utilisateur.

11. Procédé selon la revendication 8, **caractérisé en ce qu'**au moins un événement de manipulation est défini en tant qu'un mouvement aller et retour du pied de l'utilisateur.

12. Procédé selon la revendication il, **caractérisé en ce que** pendant l'événement de manipulation, les deux éléments capteurs (6, 7) génèrent une courbe temporelle impulsionnelle des valeurs de mesure des capteurs (8, 9) (une impulsion de capteurs).

13. Procédé selon l'une quelconque des revendications précédentes, **caractérisé en ce que** le modèle d'événements de manipulation contient une série de caractéristiques qui sont associées à la courbe des valeurs de mesure des capteurs (8, 9) d'au moins un élément capteur (6, 7) qui est typique pour l'événement de manipulation, et qui dans le cadre de la supervision des événements de manipulation, sont d'abord extraites des valeurs de mesure des capteurs (8, 9) à la manière d'une identification de modèle et ensuite classées.

14. Procédé selon la revendication 13, **caractérisé en ce que** les caractéristiques sont définies en tant que largeur et/ou en tant que hauteur et/ou en tant que pente de signal et/ou en tant que courbes de parties des impulsions de capteurs et/ou en tant que décalage temporel de deux impulsions de capteur d'un élément capteur (6, 7).

15. Dispositif d'éléments de fermeture d'un véhicule automobile destiné à réaliser le procédé selon l'une quelconque des revendications précédentes, le dispositif d'éléments de fermeture comportant un élément de fermeture (2), un dispositif d'entraînement (3) associé à l'élément de fermeture (2), un dispositif de commande (4), ainsi qu'un dispositif de capteurs (5) avec au moins un élément capteur (6, 7), dans le cadre d'une supervision des événements de manipulation le dispositif de commande (4) supervisant des événements de capteurs dans les valeurs de mesure des capteurs (8, 9) du dispositif de capteurs (5) au niveau de la présence d'un événement de manipulation prédéfini et en fonction du résultat de la supervision des événements de manipulation, procédant à une activation du dispositif d'entraînement (3), la supervision de l'événement de manipulation étant basée sur au moins un modèle d'événement de manipulation sauvegardé dans le dispositif de commande (4) et le modèle d'événement de manipulation étant susceptible d'être généré et/ou paramétré lors d'une utilisation en service normal.
